(19) Europäisches Patentamt
European Patent Office
Office européen des brevets

(11) EP 4 056 535 A1

(12) EUROPEAN PATENT APPLICATION

(43) Date of publication:
**14.09.2022 Bulletin 2022/37**

(21) Application number: **21162385.5**

(22) Date of filing: **12.03.2021**

(51) International Patent Classification (IPC):
***C01G 53/00*** *(2006.01)* ***H01M 4/131*** *(2010.01)*

(52) Cooperative Patent Classification (CPC):
**C01G 53/42; C01G 53/50; H01M 4/131;**
C01P 2004/61; C01P 2004/86

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BASF SE**
**67056 Ludwigshafen am Rhein (DE)**

(72) Inventors:
- **RIEWALD, Felix Florian**
  **72072 Tuebingen (DE)**
- **KURZHALS, Philipp**
  **67056 Ludwigshafen (DE)**
- **STREMPEL, Verena**
  **67056 Ludwigshafen (DE)**
- **SOMMER, Heino**
  **72072 Tuebingen (DE)**

(74) Representative: **BASF IP Association**
**BASF SE**
**GBI-C006**
**67056 Ludwigshafen (DE)**

# (54) PROCESS FOR MAKING AN ELECTRODE ACTIVE MATERIAL, AND ELECTRODE ACTIVE MATERIAL

(57) Process for making a partially coated electrode active material wherein said process comprises the following steps:
(a) formula $Li_{1+x}TM_{1-x}O_2$, wherein TM contains at least 90 mol-% Ni, and x is in the range of from - 0.05 to 0.05,
(b) treating said electrode active material with an alkoxide or amide of zirconium,
(c) treating the material obtained in step (b) with moisture,
(d) repeating the sequence of steps (b) and (c) four to twelve times,
(e) performing a post-treatment by heating the material obtained after the last step (d) at a temperature from 250 to 750°C.



Processed by Luminess, 75001 PARIS (FR)

## Description

The present invention is directed towards a process for making a partially coated electrode active material wherein said process comprises the following steps:

(a) Providing an electrode active material according to general formula $Li_{1+x}TM_{1-x}O_2$, wherein TM contains at least 90 mol-% Ni, and x is in the range of from - 0.05 to 0.05,
(b) treating said electrode active material with an alkoxide or amide of zirconium,
(c) treating the material obtained in step (b) with moisture,
(d) repeating the sequence of steps (b) and (c) four to twelve times, wherein the last step (c) may be replaced by a step (c*) including a treatment with ozone instead of moisture,
(e) performing a post-treatment by heating the material obtained after the last step (d) at a temperature from 250 to 750°C.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

One problem of lithium ion batteries is attributed to undesired reactions on the surface of the cathode active materials. Such reactions may be a decomposition of the electrolyte or the solvent or both. It has thus been tried to protect the surface without hindering the lithium exchange during charging and discharging. Examples are attempts to coat the cathode active materials with, e.g., aluminium oxide or calcium oxide, see, e.g., US 8,993,051.

The efficiency of the process, however, may still be improved. Especially in embodiments wherein the particles have a tendency to agglomerate the efficiency sometimes leaves room for improvement both in respect to reaction time and percentage of covered particles.

It was therefore an objective of the present invention to provide a process by which electrode active materials may be coated to reduce the tendency of resistance build-up during repeated cycling.

Accordingly, the process as defined at the outset has been found, hereinafter also referred to as inventive process or as process according to the (present) invention. The inventive process is a process for making a coated electrode active material.

The term "coated" as used in the context with the present invention refers to at least 80% of the particles of a batch of particulate material being coated, and to at least 75% of the surface of each particle being coated, for example 75 to 99.99% and preferably 80 to 90%. Said coating may be complete and homogeneous but preferably, such coating is in the form of a Tilsit cheese-like structure, non-coated parts corresponding to the holes.

The thickness of such coating may be very low, for example 0.1 to 5 nm. In other embodiments, the thickness may be in the range of from 6 to 15 nm. In further embodiments, the thickness of such coating is in the range of from 16 to 50 nm. The thickness in this context refers to an average thickness determined mathematically by calculating the amount of metal alkoxide or metal halide or metal amide or alkyl metal, respectively, per particle surface in $m^2$ and assuming a 100% conversion.

Without wishing to be bound by any theory, it is believed that non-coated parts of particles do not react due to specific chemical properties of the particles, for example density of chemically reactive groups such as, but not limited to hydroxyl groups, oxide moieties with chemical constraint, or to adsorbed water.

In one embodiment of the present invention the electrode active material has an average particle diameter (D50) in the range of from 3 to 20 μm, preferably from 5 to 16 μm. The average particle diameter can be determined, e. g., by light scattering or LASER diffraction or electroacoustic spectroscopy. The particles are usually composed of agglomerates from primary particles, and the above particle diameter refers to the secondary particle diameter.

In one embodiment of the present invention, the electrode active material has a specific surface (BET), hereinafter also referred to as "BET surface", in the range of from 0.1 to 1.5 $m^2/g$. The BET surface may be determined by nitrogen adsorption after outgassing of the sample at 200°C for 30 minutes or more and beyond this accordance with DIN ISO 9277:2010.

The inventive process comprises five steps (a), (b), (c), (d) and (e), in the context of the present invention also referred to as step (a), step (b), step (c), step (d) and step (e).

Step (a) includes providing an electrode active material according to general formula $Li_{1+x}TM_{1-x}O_2$, wherein TM contains at least 90 mol-% Ni, and x is in the range of from -0.05 to 0.05.

TM may be selected from combinations of Mn and Ni, or Ni and Co, or from combinations of Ni, Mn and Co,

optionally in each case with at least one more metal selected from Al, Ti, Zr, W, and Mo, preferably at least one of Al, W, Ti and Zr. Preferred are combinations of Ni and Co and of Ni and Co and Mn, optionally in each case with at least one more metal selected from Al, W, Ti and Zr.

In another embodiment, TM is nickel.

In a preferred embodiment, TM is a combination of metals according to general formula (I)

$$(Ni_aCo_bMn_cM_d) \qquad (I)$$

with

a being in the range of from 0.93 to 0.99,
b being in the range of from zero to 0.07,
c being in the range of from zero to 0.0.07, and
d being in the range of from zero to 0.05,

M is selected from Al, Ti, Nb, W, Ta, and Mg, and

$$a + b + c + d = 1.$$

In a more preferred embodiment, $b + c >$ zero.

In a preferred embodiment,
a is in the range of from 0.97 to 0.995, more preferably from 0.98 to 0.995,
b is in the range of from 0.002 to 0.04,
c is in the range of from 0.002 to 0.02, and
d is in the range of from zero to 0.02.

Said electrode active material is preferably provided without any additive such as conductive carbon or binder but as free-flowing powder.

In one embodiment of the present invention, said cathode active material provided in step (a) has a residual moisture content in the range of from 50 to 1,000 ppm, preferably from 100 to 400 ppm. The residual moisture content may be determined by Karl-Fischer titration.

In step (b), said electrode active material is treated with an alkoxide or amide of zirconium.

In one embodiment of the inventive process, step (b) is performed at a temperature in the range of from 15 to 1000°C, preferably 15 to 500°C, more preferably 20 to 350°C, and even more preferably 50 to 220°C. It is preferred to select a temperature in step (b) at which alkoxide or amide of zirconium, as the case may be, is in the gas phase.

In one embodiment of the present invention, step (b) is carried out at normal pressure but step (b) may as well be carried out at reduced or elevated pressure. For example, step (b) may be carried out at a pressure in the range of from 5 mbar to 1 bar above normal pressure, preferably 10 to 150 mbar above normal pressure. In the context of the present invention, normal pressure is 1 atm or 1013 mbar. In other embodiments, step (b) may be carried out at a pressure in the range of from 150 mbar to 560 mbar above normal pressure. In other embodiments, step (b) is carried out at a pressure of 100 to 1 mbar below normal pressure.

In one embodiment of the present invention, alkoxide or amide of zirconium, respectively, is selected from $Zr(OR^1)_4$ and $Zr[N(R^2)_2]_4$, wherein
$R^1$ are different or equal and selected from $C_1$-$C_4$-alkyl, straight-chain or branched.

Examples of alkoxides are methanolates, hereinafter also referred to as methoxides, ethanolates, hereinafter also referred to as ethoxides, propanolates, hereinafter also referred to as propoxides, and butanolates, hereinafter also referred to as butoxides. Specific examples of propoxides are n-propoxides and iso-propoxides. Specific examples of butoxides are n-butoxides, iso-butoxides, sec.-butoxides and tert.-butoxides. Combinations of alkoxides are feasible as well.

Preferred examples of zirconium alkoxides are the $C_1$-$C_4$-alkoxides, for example $Zr[OCH(CH_3)_2]_4$, $Ti(OC_4H_9)_4$, $Zr(OC_4H_9)_4$, $Zr(OC_2H_5)_4$, $Zr(OCH_3)_4$, and $Zr(OC_2H_5)_2(O\text{-sec.-}C_4H_9)_2$.

Zirconium amides are sometimes also referred to as zirconium imides. Examples of zirconium amides are $Zr[N(C_2H_5)_2]_4$, $Zr[N(CH_3)_2]_4$, and $Zr[(CH_3)N(C_2H_5)]_4$.

Particularly preferred compounds in step (b) are selected from metal zirconium amides, and even more preferred is $Zr[N(CH_3)_2]_4$.

In one embodiment of the present invention, the amount of zirconium amide is in the range of 0.1 to 1 g/kg

electrode active material.

Preferably, the amount of zirconium amide is calculated to amount to 80 to 200% of a monomolecular layer on the electrode active material per cycle.

Step (b) of the inventive process as well as step (c) - that will be discussed in more detail below - may be carried out in the same or in different vessels.

In one embodiment of the present invention, step (b) is performed in a rotary kiln, in a free fall mixer, in a continuous vibrating bed or a fluidized bed.

In a preferred embodiment of the present invention, the duration of step (b) is in the range of from 1 second to 2 hours, preferably 1 second up to 10 minutes.

In a third step, in the context of the present invention also referred to as step (c), the material obtained in step (b) is treated with moisture.

In one embodiment of the present invention, step (c) is carried out at a temperature in the range of from 50 to 250°C.

In one embodiment of the present invention, step (c) is carried out at normal pressure but step (c) may as well be carried out at reduced or elevated pressure. For example, step (c) may be carried out at a pressure in the range of from 5 mbar to 1 bar above normal pressure, preferably 10 to 250 mbar above normal pressure. In the context of the present invention, normal pressure is ambient pressure, for example 1 atm or 1013 mbar at sea level. In different altitudes, ambient pressure may be lower. In other embodiments, step (c) may be carried out at a pressure in the range of from 150 mbar to 560 mbar above normal pressure.

Steps (b) and (c) may be carried out at the same pressure or at different pressures, preferred is at the same pressure.

Said moisture may be introduced, e.g., by treating the material obtained in accordance with step (b) with moisture saturated inert gas, for example with moisture saturated nitrogen or moisture saturated noble gas, for example argon. Saturation may refer to normal conditions or to the reaction conditions in step (c).

In one embodiment of the present invention, step (c) is performed in a rotary kiln, in a free fall mixer, in a continuous vibrating bed or a fluidized bed.

In a preferred embodiment of the present invention, the duration of step (c) is in the range of from 1 second to 2 hours, preferably 1 second up to 5 minutes.

In one embodiment of the present invention, the reactor in which the inventive process is carried out is flushed or purged with an inert gas between steps (b) and (c), for example with dry nitrogen or with dry argon. Suitable flushing - or purging - times are 1 second to 30 minutes, preferably 1 second to 10 minutes. It is preferred that the amount of inert gas is sufficient to exchange the contents of the reactor of from one to 15 times. By such flushing or purging, the production of by-products such as separate particles of reaction product of metal alkoxide or metal amide or alkyl metal compound, respectively, with water can be avoided. In the case of the couple trimethyl aluminum and water, such by-products are methane and alumina or trimethyl aluminum that is not deposited on the particulate material, the latter being an undesired by-product. Said flushing may also take place after step (c), thus before another step (b). In this context, "dry" refers to a water content of less than 10 ppm by weight, for example 3 to 5 ppm.

In one embodiment of the present invention, each flushing step between (b) and (c) has a duration in the range of from one second to ten minutes.

In one embodiment of the present invention, the reactor is evacuated between steps (b) and (c). Said evacuating may also take place after step (c), thus before another step (b). Evacuation in this context includes any pressure reduction, for example 10 to 1,000 mbar (abs), preferably 10 to 500 mbar (abs).

Each of steps (b) and (c) may be carried out in a fixed bed reactor, in a fluidized bed reactor, in a forced flow reactor or in a mixer, for example in a compulsory mixer or in a free-fall mixer. Examples of fluidized bed reactors are spouted bed reactors. Examples of compulsory mixers are ploughshare mixers, paddle mixers and shovel mixers. Preferred are ploughshare mixers. Preferred ploughshare mixers are installed horizontally, the term horizontal referring to the axis around which the mixing element rotates. Preferably, the inventive process is carried out in a shovel mixing tool, in a paddle mixing tool, in a Becker blade mixing tool and, most preferably, in a ploughshare mixer in accordance with the hurling and whirling principle. Free fall mixers are using the gravitational force to achieve mixing. In a preferred embodiment, steps (b) and (c) of the inventive process are carried out in a drum or pipe-shaped vessel that rotates around its horizontal axis. In a more preferred embodiment, steps (b) and (c) of the inventive process are carried out in a rotating vessel that has baffles.

In one embodiment of the present invention, the rotating vessel has in the range of from 2 to 100 baffles, preferably 2 to 20 baffles. Such baffles are preferably flush mount with respect to the vessel wall.

In one embodiment of the present invention, such baffles are axially symmetrically arranged along the rotating vessel, drum, or pipe. The angle with the wall of said rotating vessel is in the range of from 5 to 45°, preferably 10 to 20°. By such arrangement, they can transport coated cathode active material very efficiently through the rotating vessel.

In one embodiment of the present invention, said baffles reach in the range of from 10 to 30% into the rotating

vessel, referring to the diameter.

In one embodiment of the present invention, said baffles cover in the range of from 10 to 100%, preferably 30 to 80% of the entire length of the rotating vessel. In this context, the term length is parallel to the axis of rotation.

In a preferred embodiment of the present invention the inventive process comprises the step of removing the coated material from the vessel or vessels, respectively, by pneumatic conveying, e.g. 20 to 100 m/s.

In one embodiment of the present invention, the exhaust gasses are treated with water at a pressure above one bar and even more preferably higher than in the reactor in which steps (b) and (c) are performed, for example in the range of from 1.010 to 2.1 bar, preferably in the range of from 1.005 to 1.150 bar. The elevated pressure is advantageous to compensate for the pressure loss in the exhaust lines.

Step (d) includes repeating the sequence of steps (b) and (c) four to twelve times, wherein the last step (c) may be replaced by a step (c*) including a treatment with ozone instead of moisture.

Repetition may include repeating a sequence of steps (b) and (c) each time under exactly the same conditions or under modified conditions but still within the range of the above definitions.

For example, each step (b) may be performed under exactly the same conditions, or, e.g., each step (b) may be performed under different temperature conditions or with a different duration, for example 120°C, then 10°C and 160 °C each from 1 second to 1 hour.

In step (c*), ozone replaces moisture at least partially. It is preferred that in step (c*) no humidity (moisture) is applied, and moisture is fully replaced by ozone. Ozone may be generated from oxygen under conditions known per se, and therefore, in step (c*) ozone usually is applied in the presence of oxygen.

During the application of ozone in step (c*) it is preferred that no nitrogen is present.

In one embodiment of the present invention, step (c*) is performed at normal pressure. In another embodiment of the present invention, step (c*) is performed at a pressure of 5 mbar to 1 bar above normal pressure, preferably 10 to 250 mbar above normal pressure. In another embodiment, step (c*) is performed at a pressure below normal pressure, for example at 100 to 900 mbar, preferably at 100 to 500 mbar below normal pressure. Step (c*) may be performed at temperatures from 20 to 300 °C, preferred is from 100 to 300 °C and more preferred 150 to 250 °C.

In one embodiment of the present invention, the duration of step (c*) is in the range of from 1 second to 2 hours, preferably from 1 second up to 10 minutes.

Step (c*) may be performed in the same type of vessel as step (c). Preferably, steps (c) and (c*) are performed in the same vessel.

In step (e), a post-treatment is performed by heating the material obtained after the last step (d) at a temperature from 250 to 750°C, preferred are 300 to 700°C.

In a preferred embodiment of the present invention, step (e) is carried out in an atmosphere of inert gas, for example nitrogen or a noble gas such as argon. Preferably, such inert gas has a water content in the range of from 50 to 400 ppm, preferably 100 to 200 ppm, and a carbon dioxide content ion the range of from 50 to 400 ppm. The $CO_2$ content may be determined by, e.g., optical methods using infrared light.

In one embodiment of the present invention, step (e) has a duration in the range of from 10 seconds to 2 hours, preferred are 10 minutes to 2 hours.

In a preferred embodiment, step (e) is carried out at normal pressure.

Step (e) may be performed in a rotary kiln. In special embodiments, step (e) may be performed in the same vessel as the last step (c) or step (c*), as the case may be.

A further aspect of the present invention is directed towards a particulate electrode active material, hereinafter also referred to as inventive electrode active material. Inventive electrode material has the general formula $Li_{1+x1}TM_{1-x1}O_2$, wherein TM contains at least 90 mol-% Ni, and x is in the range of from -0.05 to 0.05, and the outer surface of said particles is homogeneously coated with acidic alumina.

The homogeneous coating may be mapped by X-ray Photoelectron Spectroscopy ("XPS") or Transmission Electron Microscopy with Energy Dispersive X-ray Spectroscopy ("TEM-EDX").

TM has been defined above. TM is Ni or a combination of Ni and further metals, for example Mg or Al or transition metals other than nickel.

Inventive materials may be made by the inventive process, starting off from $Li_{1+x}TM_{1-x}O_2$. Without wishing to be bound by any theory, it is believed that the ratio TM/Li changes slightly by performing the inventive process.

In one embodiment of the present invention inventive electrode active material has an average particle diameter (D50) in the range of from 3 to 20 $\mu$m, preferably from 5 to 16 $\mu$m. The average particle diameter can be determined, e. g., by light scattering or LASER diffraction or electroacoustic spectroscopy. The particles are usually composed of agglomerates from primary particles, and the above particle diameter refers to the secondary particle diameter.

In one embodiment of the present invention, inventive electrode active material has a specific surface ("BET surface") in the range of from 0.1 to 1.5 $m^2$/g. The BET surface may be determined by nitrogen adsorption after outgassing of the sample at 200°C for 30 minutes or more accordance with DIN ISO 9277:2010.

In one embodiment of the present invention, the non-homogeneous coating has an average thickness in the

range of from 0.2 to 2 nm, preferably 0.3 to 0.8 nm.

Inventive electrode active materials are very well suited for cathodes in lithium ion batteries. They exhibit a low resistance build-up in the cause of repeated cycling, for example 500 or more cycles.

A further aspect of the present invention refers to electrodes comprising at least one electrode material active according to the present invention. They are particularly useful for lithium ion batteries. Lithium ion batteries comprising at least one electrode according to the present invention exhibit a good discharge behavior. Electrodes comprising at least one electrode active material according to the present invention are hereinafter also referred to as inventive cathodes or cathodes according to the present invention.

Cathodes according to the present invention can comprise further components. They can comprise a current collector, such as, but not limited to, an aluminum foil. They can further comprise conductive carbon and a binder.

Suitable binders are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopolyethylene, but also copolymers of ethylene which comprise at least 50 mol% of copolymerized ethylene and up to 50 mol% of at least one further comonomer, for example $\alpha$-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at least one further comonomer, for example ethylene and $\alpha$-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and $\alpha$-methylstyrene.

Another preferred binder is polybutadiene.

Other suitable binders are selected from polyethylene oxide (PEO), cellulose, carboxymethylcellulose, polyimides and polyvinyl alcohol.

In one embodiment of the present invention, binder is selected from those (co)polymers which have an average molecular weight $M_w$ in the range from 50,000 to 1,000,000 g/mol, preferably to 500,000 g/mol.

Binder may be cross-linked or non-cross-linked (co)polymers.

In a particularly preferred embodiment of the present invention, binder is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive cathodes may comprise 1 to 15% by weight of binder(s), referring to electrode active material. In other embodiments, inventive cathodes may comprise 0.1 up to less than 1% by weight of binder(s).

A further aspect of the present invention is a battery, containing at least one cathode comprising inventive electrode active material, carbon, and binder, at least one anode, and at least one electrolyte.

Embodiments of inventive cathodes have been described above in detail.

Said anode may contain at least one anode active material, such as carbon (graphite), $TiO_2$, lithium titanium oxide, silicon, lithium or tin. Said anode may additionally contain a current collector, for example a metal foil such as a copper foil.

Said electrolyte may comprise at least one non-aqueous solvent, at least one electrolyte salt and, optionally,

additives.

Non-aqueous solvents for electrolytes can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5 000 000 g/mol, preferably up to 2 000 000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds of the general formulae (III) and (IV)

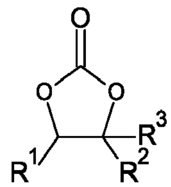

(III)

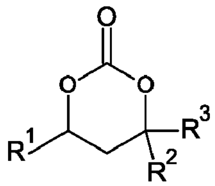

(IV)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen.

Another preferred cyclic organic carbonate is vinylene carbonate, formula (V).

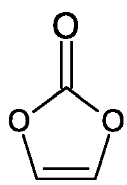

(V)

The solvent or solvents is/are preferably used in the water-free state, i.e. with a water content in the range from 1 ppm to 0.1% by weight, which can be determined, for example, by Karl-Fischer titration.

Electrolyte (C) further comprises at least one electrolyte salt. Suitable electrolyte salts are, in particular, lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)_tYLi$, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In an embodiment of the present invention, batteries according to the invention comprise one or more separators by means of which the electrodes are mechanically separated. Suitable separators are polymer films, in particular porous polymer films, which are unreactive toward metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 45%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries according to the invention further comprise a housing which can have any shape, for example cuboidal or the shape of a cylindrical disk or a cylindrical can. In one variant, a metal foil configured as a pouch is used as housing.

Batteries according to the invention display a good discharge behavior, for example at low temperatures (zero °C or below, for example down to -10°C or even less), a very good discharge and cycling behavior, in particular at high temperatures (45 °C or higher, for example up to 60°C) in particular with respect to the capacity loss, and a good safety behavior at high temperatures such as 60°C or more. Preferably, also the cycle stability and the C-rate capacity behavior are improved, or they are at least identical although the Li content is lower.

Batteries according to the invention can comprise two or more electrochemical cells that combined with one another, for example can be connected in series or connected in parallel. Connection in series is preferred. In batteries according to the present invention, at least one of the electrochemical cells contains at least one cathode according to the invention. Preferably, in electrochemical cells according to the present invention, the majority of the electrochemical cells contains a cathode according to the present invention. Even more preferably, in batteries according to the present invention all the electrochemical cells contain cathodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The invention is further illustrated by working examples.

I. Cathode active materials

1.1. Manufacture of a precursor for cathode active materials

A spherical $Ni(OH)_2$ precursor was obtained by combining aqueous nickel sulfate solution (1.65 mol/kg solution) with an aqueous 25 wt.% NaOH solution and using ammonia as complexation agent. The pH value was set at 12.6. The freshly precipitated $Ni(OH)_2$ was washed with water, sieved and dried at 120 °C for 12 hours. Subsequently, the freshly precipitated $Ni(OH)_2$ was poured into an alumina crucible and dried in a furnace under oxygen atmosphere (10 exchanges/h) at 500 °C for 3 hours using a heating rate of 3 °C/min and a cooling rate of 10 °C /min to obtain the precursor p-CAM.1. p-CAM.1 was NiO with an average diameter D50 of 11 μm.

1.2. Manufacture of a base cathode active material, B-CAM.1

The precursor p-CAM.1 was mixed with $LiOH.H_2O$ in a molar ratio of Li:Ni of 1.01:1, poured into a alumina crucible and heated at 350°C for 4 hours and 700°C for 6 hours under oxygen atmosphere (10 exchanges/h) using a heating rate of 3 °C/min. The resultant material was cooled to ambient temperature at a cooling rate of 10 °C / min and subsequently sieved using a mesh size of 30 μm to obtain base material B-CAM.1 with a D50 of 11 μm.

1.3. Manufacture of cathode active materials

1.3.1 Manufacture of a comparative cathode active material

C-CAM.1 (Comparative): A rotary kiln ALD reactor with external heating jacket ("rotary kiln reactor") was charged with 100 g of B-CAM.1, and under atmospheric pressure B-CAM.1 was rotated with 15 rpm. The rotary kiln reactor was heated to 180 °C and kept at 180 °C for 3 h.

Step (b.1): $Zr[N(CH_3)_2]_4$ ("TDMAZ") in the gaseous state was introduced into the rotary kiln reactor by opening a

valve to a precursor reservoir that contained TDMAZ in solid form and that was kept at 50° C. The TDMAZ was diluted with nitrogen as carrier gas. After a reaction period of 30 minutes non-reacted TDMAZ was removed through the nitrogen stream, and the reactor was purged with nitrogen.

Step (c.1): Then, water in the gaseous state was introduced into the rotary kiln reactor by opening a valve to a reservoir that contained liquid water kept at 24 °C. After a reaction period of 30 minutes non-reacted water was removed through the nitrogen stream, and the reactor was purged with nitrogen.

Step c-(d.1): The above sequence was repeated three times. Then, the rotary kiln reactor was cooled to 25 °C and the resultant material was discharged.

Step (e.1): The material from step (d.1) was transferred in a alumina crucible and heated in a box furnace under oxygen atmosphere (10 exchanges/h) at 350 °C for 1 h using a heat rate of 3 °C/min.

The resultant C-CAM.1 displayed the following properties: D50 = 11.0 μm determined using the technique of laser diffraction in a Mastersize 3000 instrument from Malvern Instruments. The Zr-content was determined by ICP analytics to be 0.002% by weight.

I.3.2 Manufacture of an inventive cathode active material

Step (b.2): TDMAZ in the gaseous state was introduced into the rotary kiln reactor by opening a valve to a precursor reservoir that contained TDMAZ in solid form and that was kept at 50° C. The TDMAZ was diluted with nitrogen as carrier gas. After a reaction period of 30 minutes non-reacted TDMAZ was removed through the nitrogen stream, and the reactor was purged with nitrogen.

Step (c.2): Then, water in the gaseous state was introduced into the rotary kiln reactor by opening a valve to a reservoir that contained liquid water kept at 24 °C. After a reaction period of 30 minutes non-reacted water was removed through the nitrogen stream, and the reactor was purged with nitrogen.

Step (d.2): The above sequence was repeated nine times. Then, the rotary kiln reactor was cooled to 25 °C and the resultant material was discharged.

Step (e.2): One portion of the material from step (d.2) was transferred in an alumina crucible and heated in a box furnace under oxygen atmosphere (10 exchanges/h) at 350 °C for 1 hours using a heating rate of 3 °C/min and a cooling rate of 10 °C /min to obtain the electrode material CAM.2-1. The other portion of the material from step (d.2) was transferred in an alumina crucible and heated in a furnace under oxygen atmosphere (10 exchanges/h) at 700 °C for 1 hours using a heating rate of 3 °C/min and a cooling rate of 10 °C /min to obtain the electrode material CAM.2-2.

The resultant CAM.2-1 and CAM.2-2 displayed the following properties: D50 = 11 μm determined using the technique of laser diffraction in a Mastersize 3000 instrument from Malvern Instruments. The Zr-content was determined by ICP analytics to be 0.004% by weight. The zirconia on the outer surface was acidic.

II. Electrochemical cells

11.1. Manufacture of electrodes for electrochemical testing

The positive electrodes for the electrochemical cycling experiments in single layer pouch cells were prepared by coating on aluminum foil (thickness = 20 μm) using a continuous doctor knife coating system with subsequent drying (Mathis, KTF-S) a slurry containing 94 wt.% cathode active material (94 wt.%), 1 wt.% active carbon (Super C65 L purchased form Imerys), 2 wt.% graphite (SFG6L from Imerys) and 3 wt.% polyvinylidene fluoride (PVdF) binders suspended in N-methyl-2-pyrrolidinone (NMP). Typically, all the slurries were prepared based on at least 30 g of cathode active material and the amount of NMP employed was such that the total solid content (CAM + SuperC65 L + SFG6L + PVdF) was ca. 65 %. Before the cell assembly, the electrode tapes were dried in a hot-air chamber at 120 °C over a period of 16 hours and finally pressed using a roll calender.

11.2. Electrochemical testing in half-cells

Electrochemical testings of cathode active materials (B-CAM.1, C-CAM.2, and CAM.3) were carried out in coin half cells (vs. Li metal as anode material, 1M $LiPF_6$ in EC:EMC wt% as electrolyte (EC = ethylene carbonate, EMC = ethyl methyl carbonate), GF/D glass fiber separator (Whatman), and CR2032 from Hohsen Corp.) to obtain a 1$^{st}$ cycle discharge capacity.

Table 1: Results obtained from electrochemical cells of cathode active materials vs. Li metal anode

| CAM No. | 1st discharge capacities at 25 °C and 0.1C | Efficiency [%] | discharge capacities (cycle No. 15) | 16th cycle DCiR at 50% SOC ($\Omega \cdot cm^2$) |
|---|---|---|---|---|
| B-CAM.1 | 228.41 | 89.3 | 201.41 | 35.14 |
| C-CAM.1 | 228.79 | 88.3 | 197.05 | 24.85 |
| CAM.2-1 | 228.92 | 89.6 | 201.15 | 24.61 |
| CAM.2-2 | 228.82 | 89.2 | 201.78 | 22.82 |

Extended Table 1:

| CAM No. | discharge capacities (cycle No. 67) | 68th cycle DCiR at 50% SOC ($\Omega \cdot cm^2$) | discharge capacities (cycle No. 119) | 120th cycle DCiR at 50% SOC ($\Omega \cdot cm^2$) |
|---|---|---|---|---|
| B-CAM.1 | 168.73 | 60.09 | 156.78 | 116.00 |
| C-CAM.1 | 165.97 | 53.51 | 153.56 | 109.31 |
| CAM.2-1 | 170.63 | 39.08 | 157.31 | 72.80 |
| CAM.2-2 | 171.68 | 38.69 | 158.68 | 73.03 |

DCiR: direct current internal resistance, SOC: state of charge

**Claims**

**1.** Process for making a partially coated electrode active material wherein said process comprises the following steps:

(a) providing an electrode active material according to the formula $Li_{1+x}TM_{1-x}O_2$, wherein TM contains at least 90 mol-% Ni, and x is in the range of from -0.05 to 0.05,
(b) treating said electrode active material with an alkoxide or amide of zirconium,
(c) treating the material obtained in step (b) with moisture,
(d) repeating the sequence of steps (b) and (c) twice to ten times, wherein the last step (c) may be replaced by a step (c*) including a treatment with ozone instead of moisture,
(e) performing a post-treatment by heating the material obtained after the last step (d) at a temperature from 250 to 750°C.

**2.** Process according to claim 1 wherein TM is a combination of metals according to general formula (I)

$$(Ni_aCo_bMn_cM_d) \qquad (I)$$

with

a being in the range of from 0.93 to 0.99,
b being in the range of from zero to 0.07,
c being in the range of from zero to 0.0.07, and
d being in the range of from zero to 0.05,
M is selected from Al, Ti, Nb, W, Ta, and Mg, and

$$a + b + c + d = 1.$$

3. Process according to claim 1 or 2 wherein step (b) is performed in a rotary kiln, a free fall mixer, in a continuous vibrating bed or a fluidized bed.

4. Process according to any of the preceding claims wherein zirconium amide in step (b) is $Zr[N(CH_3)_2]_4$.

5. Process according to any of the preceding claims wherein each flushing step between (b) and (c) has a duration in the range of from one second to ten minutes.

6. Process according to any of claims 1 to 5 wherein steps (b) to (c) and (e) are performed in a fluidized bed.

7. Process according to any of the preceding claims wherein TM is Ni.

8. Process according to any of the preceding claims wherein step (e) is performed in an atmosphere of inert gas.

9. Process according to any of the preceding claims wherein step (e) has a duration in the range of from 10 minutes to 2 hours.

10. Particulate electrode active material according to general formula $Li_{1+x1}TM_{1-x1}O_2$ wherein TM contains at least 90 mol-% Ni, and x1 is in the range of from -0.07 to 0.03, wherein the outer surface of said particles is homogeneously coated with acidic zirconia.

11. Particulate material according to claim 11 wherein TM is Ni.

12. Use of a particulate electrode active material according to 10 or 11 in or for the manufacture of a lithium ion battery.

Europäisches Patentamt
European Patent Office
Office européen des brevets

# EUROPEAN SEARCH REPORT

Application Number
EP 21 16 2385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/154702 A1 (BASF SE [DE]) 15 August 2019 (2019-08-15) * page 1, line 2 - line 15 * * page 2, line 31 - page 3, line 12 * * page 4, line 22 - line 23 * * page 4, line 35 - line 39 * * page 5, line 41 - line 42 * * page 7, line 1 - line 24; claims 1,3,5,7,9-11,13 * ----- | 1-12 | INV. C01G53/00 H01M4/131 |
| X | WO 2019/154701 A1 (BASF SE [DE]) 15 August 2019 (2019-08-15) * page 1, line 2 - line 14 * * page 3, line 1 - line 13 * * page 4, line 1 - line 9 * * page 4, line 39 - page 5, line 11 * * page 6, line 1 - line 2 * * page 8, line 1 - line 6; claims 1-3,7,10,12 * ----- | 1-12 | |
| A | WO 2020/052997 A1 (BASF SE [DE]) 19 March 2020 (2020-03-19) * the whole document * ----- | 1-12 | TECHNICAL FIELDS SEARCHED (IPC) C01G H01M |
| A | WO 2018/162234 A1 (BASF SE [DE]) 13 September 2018 (2018-09-13) * the whole document * ----- | 1-12 | |

The present search report has been drawn up for all claims

1

| Place of search | Date of completion of the search | Examiner |
|---|---|---|
| Munich | 9 July 2021 | King, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 16 2385

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2021

| Patent document cited in search report | Publication date | Patent family member(s) | Publication date |
|---|---|---|---|
| WO 2019154702 A1 | 15-08-2019 | CN 111684630 A | 18-09-2020 |
| | | EP 3750205 A1 | 16-12-2020 |
| | | JP 2021513203 A | 20-05-2021 |
| | | KR 20200116928 A | 13-10-2020 |
| | | US 2021083285 A1 | 18-03-2021 |
| | | WO 2019154702 A1 | 15-08-2019 |
| WO 2019154701 A1 | 15-08-2019 | CN 111684629 A | 18-09-2020 |
| | | EP 3750204 A1 | 16-12-2020 |
| | | JP 2021513202 A | 20-05-2021 |
| | | KR 20200119795 A | 20-10-2020 |
| | | US 2021083284 A1 | 18-03-2021 |
| | | WO 2019154701 A1 | 15-08-2019 |
| WO 2020052997 A1 | 19-03-2020 | CN 112673496 A | 16-04-2021 |
| | | EP 3850692 A1 | 21-07-2021 |
| | | WO 2020052997 A1 | 19-03-2020 |
| WO 2018162234 A1 | 13-09-2018 | CN 110383544 A | 25-10-2019 |
| | | EP 3593392 A1 | 15-01-2020 |
| | | JP 2020510291 A | 02-04-2020 |
| | | KR 20190125323 A | 06-11-2019 |
| | | US 2020377999 A1 | 03-12-2020 |
| | | WO 2018162234 A1 | 13-09-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8993051 B